Europäisches Patentamt

European Patent Office

Office européen des brevets

(19)

(11) Publication number: **0 451 715 A1**

# EUROPEAN PATENT APPLICATION

(21) Application number: 91105387.4

(22) Date of filing: 05.04.91

(51) Int. Cl.⁵: **B01D 53/22**, B01D 53/14

(30) Priority: 13.04.90 JP 96266/90

(43) Date of publication of application:
16.10.91 Bulletin 91/42

(84) Designated Contracting States:
DE GB NL

(71) Applicant: MITSUBISHI JUKOGYO KABUSHIKI
KAISHA
5-1, Marunouchi 2-chome Chiyoda-ku
Tokyo 100(JP)

(72) Inventor: Matsumoto, Hiroyo, Takasago
Technical Institute
Mitsubishi Jukogyo K.K., 1-1, Shinhama
2-chome
Arai-cho, Takasago, Hyogo Pref.(JP)
Inventor: Hatano, Shigekazu, Takasago
Technical Institute
Mitsubishi Jukogyo K.K., 1-1, Shinhama
2-chome

Arai-cho, Takasago, Hyogo Pref.(JP)
Inventor: Hamasaki, Akihiro, Takasago
Technical Institute
Mitsubishi Jukogyo K.K., 1-1, Shinhama
2-chome
Arai-cho, Takasago, Hyogo Pref.(JP)
Inventor: Haneda, Hisao, Kobe Shipyard &
Engine Works
Mitsubishi Jukogyo K.K., 1-1, Wadasaki-cho
1-chome
Hyogo-ku, Kobe, Hyogo Pref.(JP)
Inventor: Kitamura, Hikaru, Kobe Shipyard &
Engine Works
Mitsubishi Jukogyo K.K., 1-1, Wadasaki-cho
1-chome
Hyogo-ku, Kobe, Hyogo Pref.(JP)

(74) Representative: Dr. Fuchs, Dr. Luderschmidt
Dipl.-Phys. Seids, Dr. Mehler Patentanwälte
Abraham-Lincoln-Strasse 7
W-6200 Wiesbaden(DE)

(54) Apparatus for separating polar gases.

(57) An apparatus for separating polar gas(es) from a gas source by absorption and desorption of the polar gas(es) by gas/liquid mass transfer, which comprises (1) an encased module of porous hollow filaments made of hydrophobic material and having innumerable micropores penetrating through the filament wall and distributed over the filament wall for effecting gas/liquid mass transfer, in which the gas to be treated flowing the internal holes of the hollow filaments is brought, on the outer face of the porous hollow filaments at each end opening of the micropore thereof, into contact with an absorption liqor flowing in the external space of the hollow filaments of the module, and (2) a stripping tower for driving out the absorbed polar gas molecules from theabsorption liqor.

Fig. 1

## 2. FIELD OF THE INVENTION AND RELATED ART STATEMENT

The present invention relates to an apparatus for separating polar gases, such as, $CO_2$, $SO_2$, $H_2S$, $NH_3$ and so on, from various gas sources containing such polar gases, which can be applied advantageously also to waste gas treatment for contributing to keeping natural environment in a favorable condition.

Heretofore, the separation or removal of polar gas from waste gas has been accomplished mainly by so-called ad-and-desorption process employing a solid adsorbent, such as, zeolites, solid amines and so on. This process necessitates two periodically alternating steps, namely, adsorption run, in which the waste gas is passed through a bed of adsorbent particles to remove the polar gas contained therein by adsorption on the adsorbent particles, and regeneration run, in which the polar gas molecules adsorbed on the adsorbent particles are subjected to desorption from the adsorbent by stripping with steam or by applying vacuum using a vacuum pump together with heating. In order to realize a continuous operation with such prior art apparatus, it is necessary, therefore, to provide for a parallel installation of two sets of adsorption unit, which are operated in such a manner, that either one of them is operated in adsorption run while the other is in regeneration run with periodical alternation of these runs between the two units.

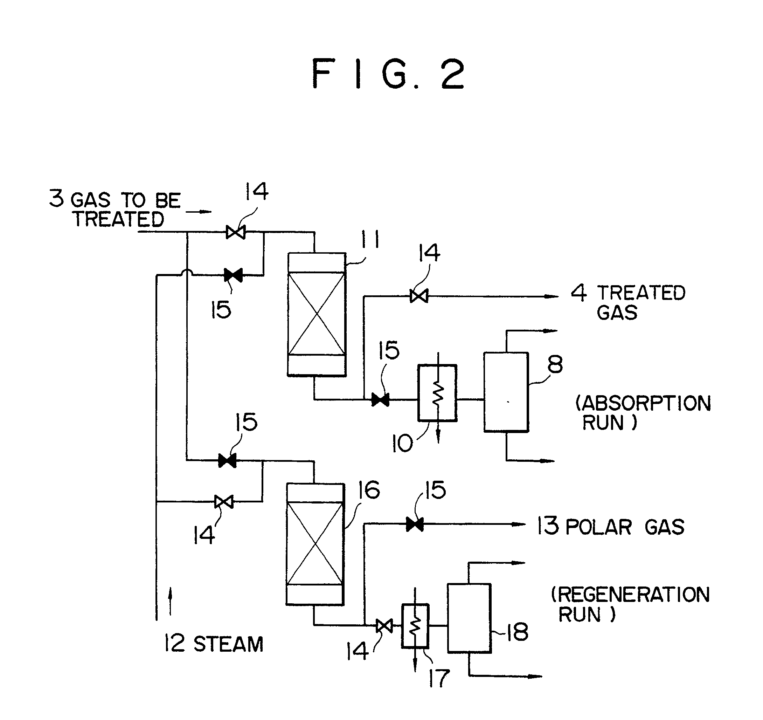

A typical schema of operation of such conventional apparatus on the ad-and-desorption principle using two sets of adsorption unit with solid adsorbent is schematically illustrated in Fig. 2. In this apparatus, either one of adsorption towers, for example, tower 11, is operated in adsorption run, while the other adsorption tower 16 is in regeration run. The gas 3 to be treated is supplied to the adsorption tower 11, in which the polar gas(es) contained therein is separated by adsorption on the adsorbent particles in an adsorption bed therein and the thus treated gas 4 is exhausted from the apparatus. On the other hand, the adsorption tower 16 is operated in regeneration run by supplying steam 12 for stripping the absorption bed therein. The polar gas molecules adsorbed on the adsorbent particles in the adsorption tower 16 are stripped or blown off by the hot steam and desorbed from the adsorbent, whereby the regeneration of the adsorption bed is effected. The so desorbed polar gas(es) is forwarded with the spent steam 12 to a heat exchanger 17, where the gas(es) is cooled and the steam is condensed into water. The flow of polar gas(es) containing mist of condensed water is then conducted into a gas/liquid separator 18, where the polar gas(es) 13 is separated from the condensed water and is exhausted from the apparatus.

In the course of adsorption run, the adsorbent bed in the adsorption tower 11 becomes saturated with the polar gas molecules progressively from the entrance side thereof. When, the adsorption capacity of the adsorption bed has been depleted, the feed line to the absorption tower 11 is changed over to the steam supply line 12, while the feed line to the other adsorption tower 16 is changed over to the aupply line of the gas 3 to be treated by turning over the entrance valves from 14 to 15. In this manner, the two units exchange their operations of absorption run and regeneration run.

The outlet of the absorption tower 11 is thus connected to a heat exchanger 10 and a gas/liquid separator 8 which correspond to the heat exchanger 17 and the gas/liquid separator 18 for the adsorption tower 16 respectively.

## 3. OBJECT AND SUMMARY OF THE INVENTION

As explained above, conventional apparatuses on the ad-and-desorption principle require two sets of absorption unit operating alternately in an absorption run or a regeneration run, which is accompanied by somewhat complicated operation procedures.

The present invention was attempted in order to avoid the above problems. The object of the present invention is, therefore, to provide an apparatus for separating polar gas(es) from a gas source, which is capable of effecting continuous operation with simple operation procedures therefor.

Thus, the present invention relates to an apparatus for separating polar gas(es) from a gas source containing polar gas(es), which comprises (1) an encased module of porous hollow filaments made of hydrophobic material and having innumerable micropores penetrating through the wall of the hollow filament and distributed over the wall of the hollow filament for effecting gas/liquid mass transfer, in which the gas to be treated flowing in the external space of the hollow filaments of the module is brought, on the outer side face of the hydrophobic porous hollow filaments at each end opening of the micropores, into contact with an absorption liqor flowing in the external space of the hollow filaments of the module, and (2) a stripping tower for stripping, i.e., driving out the absorbed polar gas molecules from the absorption liqor.

The gas/liquid contact is effected on the outer face of the hydrophobic hollow filaments at each end opening of innumerable micropores of a diameter in the range from 0.01 to 1 $\mu$m which are distributed over the filament wall and which penetrate therethrough. Due to the hydrophobic nature of the porous hollow filament, the absorption liqor is not permitted to intrude into the micropore by being repelled by the filament at the micropore openeing end.

The gas absorption is supported by the driving force due to the pressure gradient with respect to the partial pressure of the polar gas in the laminar sublayer existing between the gas phase and the absorption liqor. Since the absorption liqor has almost no content of the polar gas molecule, the difference in the partial pressure of the polar gas between the gas space and the adsorption liqor surface equals substantially to the partial pressure of the polar gas in the gas source supplied, which provides for the driving force for the absorption.

Stripping of the absorbed polar gas(es) is realized by heating the absorption liqor containing absorbed therein the polar gas molecules, so as to lower the solubility of the polar gas(es) in the liqor. Due to the quite large decrease in the solubility of the polar gas(es) in the absorption liqor by the elevation of the liquid temperature, the polar gas molecules contained in the absorption liqor will almost be driven out of the absorption liqor.

## 4. BRIEF DESCRIPTION OF THE DRAWINGS

Fig. 1 is a schematic flow diagram of one embodiment of the apparatus according to the present invention.

Fig. 2 is a schematic flow diagram of a typical arrangement of conventional apparatus for separating polar gas from a gas source.

## 5. DETAILED DESCRIPTION OF PREFERRED EMBODIMENT

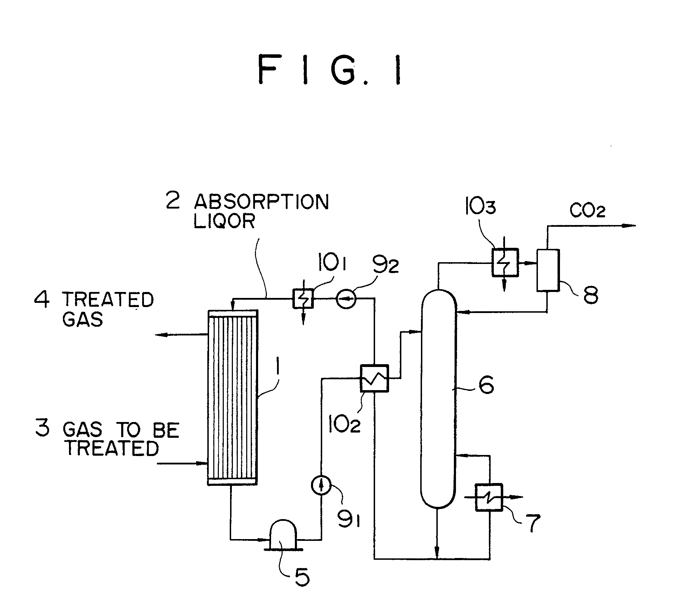

An embodiment of the apparatus according to the present invention is explained with reference to appended Fig. 1. The apparatus is designed here for removing $CO_2$ from chimney gas so as to contribute to counteract against the global atmospheric warming.

The gas to be treated (3) is supplied to the external space of a large number of porous hollow filaments arranged in a form of a filament module 1 encased within an outer shell. The absorption liqor 2 is supplied to the internal holes of the hollow filaments made of a hydrophobic porous material after having been cooled in a heat exchanger $10_1$. The gas 3 to be treated is bought into contact with the absorption liqor 2 on the outer face of the porous hollow filaments at each end opening of the micropores penetrating through the filament wall. The polar gas molecules contained in the supply gas 3 ·passing through the inside holes of hollow filaments are absorbed by the absorption liqor 2 by a mass transfer at the interface between the gas and the liqor held detained by the capillary surface tension of the liqor at the end opening of each of the penetrating micropores due to the hydrophobic nature of the filament. In the course of passage of the gas through the inside hole of the hollow filament, the gas becomes depleted of the polar gas content and is exhausted from the other end of the filament as treated gas 4 in a condition almost completely freed from the polar gas(es).

The absorption liqor 2 containing the polar gas component absorbed is conducted then via a storage tank 5 and a pump $9_1$ to a heat exchanger $10_2$, where it is heated under heat exchange with the bottom of a gas stripping tower 6 before being supplied to the top of this gas stripping tower 6. Apart of the bottom of the gas stripping tower 6 is heated by a heater 7 and is returned to the gas stripping tower 6. The absorption liqor 2 is heated in the gas stripping tower 6 up to a temperature of at least 100 $^{\circ}C$ , whereby most of the polar gas, such as, $CO_2$ etc. is driven out of the liqor 2. The stream of the polar gas so driven out emerges therefrom with steam and is fed to a heat exchanger $10_3$, where it is cooled to condense the steam. The so cooled polar gas is freed from the mist of condensed water in the gas/liquid separator 8 and is exhausted from the apparatus, while the separated water is returned to the gas stripper. The absorption liqor 2 from which the polar gas component has almost been driven out is extracted out of the gas stripping tower 6 at its bottom and is returned to the encased filament module 1 by a pump $9_2$.

The encased Module 1 for effecting absorption of the polar gas consists of a large number (though there is no limitation, a number of, for example, from several thousands to several tens thousand may be exemplified) of hollow filaments made of a hydrophobic posous material, such as polyethylene, polypropylene, polytetrafluoroethylene and so on, having an average inner diameter of several hundreds $\mu$ m with a wall thickness of several tens $\mu$ m and accomodated in a cylindrical container vessel having inlet and outlet chambers.

For the absorption liqor, those which can realize the adsorption and desorption, i.e. stripping out, of polar gases in a smooth and easier manner and which have a high solubility for polar gases at around 40$^{\circ}C$ at which the absorption takes place and a lower solubility at around 110 - 120C at which the stripping is carried out. Examples of such absorption liqor inclede diethanolamine, aqueous solutions of $K_2CO_3$ and $KHCO_3.H_2O$ and mixtures of them.

Using the apparatus according to the present invention, a continuous operation of the apparatus can be realized in a simple manner without interrupting the running of the apparatus in a single operation mode for separating polar gas(es) from various gas sources. There is no need of parallel installation of two sets of absorption unit as in the conventional technique, whereby a compact arrangement of the apparatus is allowed with an economization of the investment cost. Therefore, the present invention offers valuable effects in the industrial applications.

**Claims**

1. An apparatus for separating polar gas(es) from a gas source by absorption and desorption of the polar gas(es) by gas/liquid mass transfer, comprising (1) an encased module of porous hollow filaments made of hydrophobic material and having innumerable micropores penetrating through the wall of the hollow filament and distributed over the wall of the hollow filament for effecting gas/liquid mass transfer, in which the gas to be treated flowing the internal holes of the hollow filaments is brought, on the outer side face of the porous hollow filaments at each end opening of the micropores thereof, into contact with an absorption liqor flowing in the external space of the porous hollow filaments of said encased module, and (2) a gas stripping tower for driving out the absorbed polar gas molecules from the absorption liqor.

2. An apparatus as claimed in Claim 1, wherein the polar gas(es) consists of at least one selected from the group consisting of $CO_2$, $SO_2$, $H_2S$ and $NH_3$.

3. An apparatus as claimed in Claim 1, wherein the hydrophobic porous hollow filament has innumerable micropores distributed over the filament wall, each penetrating through the filament wall and having a diameter of 0.01 to 1 $\mu$m.

4. An apparatus as claimed in Claim 1, wherein the absorption liqor has a higher solubility for polar gases at around the temparture at which the absorption takes place and a lower solubility for the polar gases at around the temperature at which the driving out of the absorbed gas is effected.

# F I G. 1

2 ABSORPTION LIQOR

$10_3$

CO2

$10_1$   $9_2$

4 TREATED GAS

8

1

6

$10_2$

3 GAS TO BE TREATED

$9_1$

7

5

# F I G. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 025 256 (MITSUBISHI)<br>* Claims 1-3; page 3, lines 20-68 *<br>— — — | 1-4 | B 01 D 53/22<br>B 01 D 53/14 |
| X | US-A-4 147 754 (W.J. WARD III)<br>* Claim 1; figure 3, column 5, lines 1-17 *<br>— — — | 1,2,4 | |
| X | US-A-4 119 408 (S.L. MATSON)<br>* Claims 1-5; column 6, lines 51-66 *<br>— — — | 1-4 | |
| A | GB-A-1 440 963 (C.W. SKARSTROM)<br>* Claims 1,9,10,15 *<br>— — — | 1 | |
| A | US-A-4 516 984 (J.M. WARNER)<br>* Column 5, lines 11-17; claims 1-23 *<br>— — — | 1-4 | |
| A | WO-A-8 910 783 (KERR-McGEE CHEMICAL CORP.)<br>* Figure 1 *<br>— — — — — | 1 | |
|  |  |  | TECHNICAL FIELDS SEARCHED (Int. Cl.5) |
|  |  |  | B 01 D |

The present search report has been drawn up for all claims

| Place of search | Date of completion of search | Examiner |
|---|---|---|
| The Hague | 09 July 91 | KANOLDT W.W. |